# EUROPEAN PATENT APPLICATION

(11) **EP 1 683 824 A2**
(43) Date of publication of application: **26.07.2006**
(21) Application number: 06425016.0
(22) Date of filing: 16.01.2006
(51) Int. Cl.: C08J 5/00

(54) **Vessels having high mechanical performances**

(30) Priority: 21.01.2005 IT RM20050031
(71) Applicant: Aero Sekur S.p.A., 04011 Aprilia-Latina (IT)
(72) Inventor: Hromadkova, Alice c/o Aero Sekur S.p.A, 04011 Aprilia-Latina (IT); Vasta, Emiliano c/o Aero Sekur S.p.A, 04011 Aprilia-Latina (IT); Adami, Marco c/o Aero Sekur S.p.A, 04011 Aprilia-Latina (IT); Lalli, Alessandro c/o Aero Sekur S.p.A, 04011 Aprilia-Latina (IT)
(74) Representative: Iannone, Carlo Luigi

(57) **Abstract**

The invention relates to vessels having high mechanical performances, whose structure comprises a plurality of superimposed layers, each being devoted to a peculiar function, said structure being composed by:
- 25-80% by weight of a fabric constituted by PBO fibres and/or fibres from polyester type liquid crystals and/or high molecular weight polyethylene fibres;
- 2,5-15% by weight of a polyimide film and/or a polyetheretherketone film;
- 10-40% by weight of a rubber solution based on a nitrilic rubber;
- 0-35% by weight of rubber blends having self-sealant aptitude.

The invention also relates to a method for the production of said vessels and particular rubber solutions of said vessels.

## Description

The present invention concerns vessels having high mechanical performances.

The invention refers to the field of vessels for aerospace, sea or land applications, having flexible, self-stagnant or impact resistant structure.

At present, the flexible part of the vessels available on the market is obtained by coupling subsequent layers of special rubberized fabrics, adhesives, waterproofing solutions, which, once they are vulcanised, form a single body named "structure". The mechanic flanges and other discontinuity points and particulars that are present on each vessel, are vulcanised on the vessel and therefore are integral thereof.

The main requisites to be respected by vessels are impermeability to fuel and, as far as all aeronautic products is concerned, lower weight for the same required mechanical features. Depending on the different uses to which they are addressed, different kind of vessels can be distinguished, having different features one from the others.

The flexible vessels, particularly suitable for the use in aircrafts, boats and sports cars, must be endowed with high flexibility, even complex form, aptitude to occupy all the space available in the room where the vessel is located. A typical example of a flexible structure addressed to a vessel of this kind is constituted by a plurality of layers coupled to each other, that is, starting from the outside of the vessel, a first layer of a ozone resistant protective solution, a layer of rubberised Nylon® fabric, a layer of a coupling solution, one or more layers of impermeable solutions (that is a Nylon® barrier), a further layer of coupling solution and a layer of rubberised Nylon® fabric.

The self-stagnant (or self-sealant) vessels are generally installed on aircrafts and helicopters, battle tanks, navy or police boats and are generally adopted on all those vehicles whose specific mission requisites provide for the possibility of being exposed to gunfire and where it is required the maximum surviving aptitude. This kind of vessels are designed for preventing fuel leakage caused by gunfire and present the aptitude of self-sealing gunfire holes of up to 20-23 mm gauge. A typical example of self-stagnant structure comprises, from the outside down to the inside of the vessel, a first layer of an ozone resistant protective solution, one or two subsequent layers of rubberized Nylon® fabric, one layer of a coupling solution, one layer of a material having self-sealant aptitude, another layer of coupling solution, one or more layers of impermeable solutions (Nylon® barrier), a further layer of coupling solution and finally another layer of rubberized Nylon® fabric.

Finally, impact resistant vessels (also called crash-resistant vessels) are largely adopted in civil and military helicopters in order to improve the crew surviving possibilities in case of accident or emergency landing. In fact, the mechanical features of this kind of vessel must be such to grant its integrity even after impacts in consequence of failings from 15-20 m high. A typical impact resistant structure comprises a plurality of subsequent layers from the outside down to the inside of the vessel, i.e. a first external layer of an ozone resistant protective solution, one or two layers of a rubberized Nylon® fabric, a layer of coupling solution, one or more layers of impermeable solutions (Nylon® barrier), one layer of coupling solution and finally one internal layer of a rubberized Nylon® fabric.

In particular, the flanges that the vessels are provided with are realised with metallic parts made of a light alloy, are joined together with the vessel by pressing and vulcanisation together with the vessel wall's connection part made of rubberized fabric.

According to the current technology, it is not possible to sensibly improve the vessel's aeronautic features (i.e. its weight) at the same time keeping the mechanical features unchanged. Such a limitation follows from the family of raw materials used for realising the vessels and it is of growing importance with the increase of the construction requirements the vessel must satisfy.

In fact, the use of rubberized fabric on the vessel always implies an important weight as a consequence of the presence of a big amount of rubber.

Solutions were developed according to which an aramidic fabric is applied instead of the polyester commonly used for this purpose. In such cases, some improvements in the fabric mechanic resistance were measured, while the possible weight reduction came out to be quite limited, since rubber is anyway present substantially in the same amount.

It would be much better to have structures for the realisation of flexible, self-stagnant or impact-resistant vessels that, since they can refrain from the use of rubberized fabric, comes out to be lighter performances being equal.

The solution according to the present invention intervenes in this context by proposing to provide for structures for the realisation of flexible, self-stagnant or impact resistant vessels having a particular structure allowing to replace the use of rubberized fabrics with technologically advanced materials.

The solution according to the present invention further aims at improving the performances of vessels in terms of weight, mechanical features, chemical agents resistance (interesting for the security in a general meaning of the term and even for the possibility of using more powerful fuel), operative temperatures. The invention aims at the same time at improving or at least maintaining equal the permeability to fuel (lowering the weight), but also at maintaining the same production technology in terms of adhesives, flanges and other components connection, production devices. Further, the invention aims at simplifying the current productive process in terms of the number of steps and of the unfinished products.

These and other results are obtained according to the present invention by envisaging a structure in which the use of technologically advanced materials allows also for a great simplification of the structure itself, the presence of a lower number of layers being necessary.

It is therefore a first specific object of the present invention a vessel having high mechanical performances, whose structure comprises a plurality of superimposed layers, each of them being devoted to a particular function, said structure being composed of:
- 25-80% by weight of a fabric constituted by PBO fibres and/or polyester like liquid crystals fibres and/or high molecular weight polyethylene fibres;
- 2,5-15% by weight of a polyimide film and/or a polyetheretherketone film;
- 10-40% by weight of a rubber solution based on a nitrilic rubber;
- 0-35% by weight of rubber blends having self-sealant aptitude.

In particular, in a vessel of flexible type according to the present invention, said structure is composed by:
- 50-70% by weight of a fabric constituted by PBO fibres and/or polyester like liquid crystals fibres and/or high molecular weight polyethylene fibres with the following features: density 1,7 dtex, absolute density 1,5 g/cm³, humidity reabsorption (65% RH) 0,5-3%, traction breaking load 30-40 cN/dtex, traction elastic coefficient from 1000 to 2000 cN/dtex, breaking stretch from 2 to 4%;
- 2,5%-12% by weight of a polyimide film and/or a polyetheretherketone film having a thickness of 25-75 E-6 m;
- 20-40% by weight of rubber solutions based on a nitrilic rubber.

Further, in a vessel of self-stagnant type according to the present invention, said structure is composed by:
- 25-50% by weight of a fabric constituted by PBO fibres and/or polyester like liquid crystals fibres and/or high molecular weight polyethylene fibres having the following features: density 1,7 dtex, absolute density 1,5 g/cm³, humidity reabsorption (65% RH) 0,5-3%, traction breaking load 30-40 cN/dtex, traction elastic coefficient from 1000 to 2000 cN/dtex, breaking stretch from 2 to 4%;
- 5-15% by weight of a polyimide film and/or a polyetheretherketone film having a thickness of 25-75 E-6 m;
- 20-40% by weight of rubber solution based on a nitrilic rubber;
- 15-35% by weight of rubber blends having a self-sealant aptitude.

Also, in a vessel of the impact resistant type according to the present invention, said structure is composed by:
- 60-80% by weight of a fabric constituted by PBO fibres and/or polyester like liquid crystals fibres and/or high molecular weight polyethylene fibres having the following features: density 1,7 dtex, absolute density 1,5 g/cm³, humidity reabsorption (65% RH) 0,5-3%, traction breaking load 30-40 cN/dtex, traction elastic coefficient from 1000 to 2000 cN/dtex, breaking stretch from 2 to 4%;
- 5-15% by weight of a polyimide film and/or a polyetheretherketone film having a thickness of 25-75 E-6 m;
- 10-35% by weight of rubber solution based on a nitrilic rubber.

According to the present invention, said structure is composed by a series of layers, from the inside to the outside constituted by a rubber internal solution, a film of a fuel resistant material, a rubber coupling solution, a number comprised between 1 and 6 layers of fibres fabric and finally a rubber external solution.

Preferably, according to the invention, said layers of fibres fabric are imbibed in said rubber coupling solution.

In particular, in the case of impact resistant vessels according to the present invention, said structure comprises preferably 2-6 layers of fabric.
always according to the invention, in the case of self-stagnant vessels, said structure comprises preferably 2-4 layers of fabric and one layer of rubber having self-sealant aptitude, applied after a first and before a second layer of rubber coupling solution, said first layer of rubber coupling solution being applied after said film of fuel resistant material and said second layer of rubber coupling solution being applied before said fibres fabric.

It is a second specific object of the present invention a method for the production of a vessel having high mechanical performances, as previously defined, wherein the structure of the vessel is realised through sequential application of different layers, starting form the more internal layer and going towards the more external layers.

It is a third specific aspect of the present invention a rubber coupling solution, for the use in a vessel having high mechanical performances, as previously defined, obtainable according to a method comprising the following steps:
- preparing a first blend, in an amount comprised between 40 and 75% by weight of the final composition of the rubber solution, by mixing together, in a closed mixer of tangential or interpenetrating type or in an open mixer, at a temperature from 70 to 140°C, nitrilic polymer in an amount comprised between 30 and 60% by weight of said first blend, together with an amount from 15 to 40% by weight of strengthening batches, an amount from 5 to 20% by weight of resins and an amount from 1 to 10% by weight of vulcanising agent;
- making the blend uniform and removing it in the form of a foil having a thickness of 1 ÷ 5 mm;
- cutting the foil in pieces and immersing it in methylethylketone, dimethylethylketone, heptane, toluol or ethanol in a weight proportion in the range 1:1-1:11;
- allowing to bulk for 0,5-3 hours;
- completely dissolving the blend by means of a fast mixer, through a treatment of 0,50-2,5 hours;
- adding a tackifier resin in an amount between 2 and 50% by weight of the final composition of the rubber solution;
- stirring the obtained blend for a period comprised between 15 and 240 minutes, at a temperature comprised between 15 and 30°C;
- separately, preparing a second blend, in an amount comprised between 6 and 30% by weight of the final composition of the rubber solution, obtained by mixing together the following components: a vulcanising resin in an amount comprised between 15 and 30% by weight of said second blend, between 20 and 40% by weight of an adhesive resin, between 15 and 35% by weight of ethanol and between 10 and 40% by weight of methylethylketone;
- adding the second blend to the main blend in a stirrer at a temperature of 15-30°C, and stirring the obtained blend for 15-90 minutes;
- adding to the obtained blend of a component selected from ethanol and glycerol, in an amount comprised between 2 and 8% by weight of the final composition of the rubber solution, and stirring of the obtained blend for further 15-90 minutes;
- controlling the viscosity of the obtained rubber solution, and in case adjusting it by adding methylethylketone.

Preferably, according to the invention, after the step of addition to the blend of a component selected from ethanol and glycerol, and the following stirring of the obtained blend and before the step of controlling the viscosity of the obtained rubber solution, the following step is comprised:
- adding to the obtained blend of a vulcanising agent, in an amount comprised between 2 and 8% by weight of the final composition of the rubber solution, and stirring the obtained blend for further 15-90 minutes.

It is a fourth specific object of the present invention a rubber internal solution for the use in a vessel having high mechanical performances, as previously defined, obtainable through a method comprising the following steps:
- preparing a first blend, in an amount comprised between 50 and 70% by weight of the final composition of the internal solution, by initially mixing together, in a closed mixer of tangential or interpenetrating type or in an open mixer, at a temperature comprised between 70 and 140°C, the following components: nitrilic polymers in an amount comprised between 40 and 65% by weight of the first blend, between 30 and 50% by weight of strengthening batches, between 2,5 and 10% by weight of resins and between 1 and 5% by weight of vulcanising agents;
- making the blend uniform and removing it in the form of a foil having a thickness of 1 ÷ 5 mm;
- cutting the foil in pieces and immersing it in methylethylketone, dimethylethylketone, heptane, toluol or ethanol in a weight proportion in the range 1:1-1:11;
- allowing to bulk for 0,5-3 hours;
- completely dissolving the blend by means of a fast mixer, through a treatment of 0,50-2,5 hours;
- adding a tackifier resin in an amount comprised between 20 and 40% by weight of the final composition of the internal rubber solution;
- adding a vulcanising agent, in an amount between 5 and 15% by weight of the final composition of the internal rubber solution;
- stirring the blend for further 30-240 minutes;
- controlling the viscosity of the obtained rubber solution, and in case adjusting it by means of methylethylketone.

It is a fifth specific object of the present invention a rubber external solution, for the use in a vessel having high mechanical performances, as previously defined, obtainable through a method comprising the following steps:
- preparing a first blend, in an amount between 30 and 50% by weight of the final composition of the external solution, initially mixing together, in a closed mixer of tangential or interpenetrating type or in an open mixer, at a temperature comprised between 70 and 140°C, the following components: nitrilic polymers in an amount comprised between 40 and 65% by weight of the first blend, between 30 and 50% by weight of strengthening batches, between 2,5 and 10% by weight of resins and between 1 and 5% by weight of vulcanising agents;
- making the blend uniform and removing it in the form of a foil having a thickness of 1 ÷ 5 mm;
- cutting the foil in pieces and immersing it in methylethylketone, dimethylethylketone, heptane, toluol or ethanol in a weight proportion in the range 1:1-1:11;
- allowing to bulk for 0,5-3 hours;
- completely dissolving the blend by means of a fast mixer, through a treatment of 0,50-2,5 hours;
- adding a tackifier resin in an amount between 20 and 40% by weight of the final composition of the external rubber solution;
- adding a vulcanising agent, in an amount between 1 and 10% by weight of the final composition of the external rubber solution;
- stirring the blend for further 15-90 minutes;
- adding methylethylketone in an amount comprised between 20 and 40% by weight of the final composition of the external rubber solution;
- stirring the blend for further 15-240 minutes;
- controlling the viscosity of the obtained rubber solution, and in case adjusting it by means of methylethylketone.

The invention will be described herein below for illustrative, not limitative purposes, with reference in particular to some illustrative examples.

### Example 1.

A flexible vessel structure was prepared, the structure being composed by:
- 60% by weight of a fabric constituted by PBO fibres having the following features: density 1,7 dtex, absolute density 1,5 g/cm³, humidity reabsorption (65% RH) 1,0%, traction breaking load 30 cN/dtex, traction elastic coefficient 1500 cN/dtex, breaking stretch 2%;
- 5% by weight of a polyimide film having a thickness of 25 E-6 m (fuel resistant material);
- 35% by weight of a rubber solution based on a nitrilic rubber (distributed among coupling solution, internal solution and external solution).

The structure was prepared through the sequential application of different layers, consisting, from the inside to the outside, in an internal rubber solution, a film of a fuel resistant material, a rubber coupling solution, one layer of fibres fabric and an external rubber solution.

### Preparation of the rubber coupling solution

The rubber coupling solution was prepared through the following method.

A first blend was prepared, in an amount of 67% by weight of the final composition of the rubber solution. In order to prepare said first blend, the following components were initially mixed together, in a tangential type closed mixer, at a temperature of 70°C: 50% by weight of fuel impermeable nitrilic polymers, 30% by weight of strengthening batches (in particular carbon black), 15% by weight of resins and 5% by weight of vulcanising agents. The blend was made uniform and removed in the form of a foil having a thickness of 2÷3 mm, then the foil was cut in pieces and immersed in dimethylethylketone in a weight proportion of 1:3. After leaving it to bulk for 2 hours, then the blend was completely dissolved, by means of a fast mixer, having such a round speed to obtain the blend dissolution with a treatment of 2 hours and, subsequently, a tackifier resin was added thereto, in an amount of 4% by weight of the final composition of the coupling solution.

The obtained blend was then stirred for 15 minutes, at environment temperature.

Separately, a second blend had been already prepared, in an amount of 20% by weight of the final composition of the rubber coupling solution, by mixing together the following components: 25% by weight of a vulcanising resin, 30% by weight of an adhesive resin, 25% by weight of ethanol and an amount of 20% by weight of methylethylketone.

The second blend was added to the main blend in the mixer at environment temperature, continuing to stir for further 15 minutes.

Ethanol was then added to the blend in preparation, in an amount of 5% by weight of the final composition of the rubber solution, and the blend was stirred for further 30 minutes.

A vulcanising agent was subsequently added, in an amount of 4% by weight of the final composition of the rubber solution, and keeping stirring the blend for further 30 minutes.

Finally, the obtained rubber solution viscosity was controlled, in order to evaluate the need of adjusting it by addition of methylethylketone.

### Preparation of the internal rubber solution

The internal rubber solution was prepared through the following method.

A first blend was prepared, in an amount of 60% by weight of the final composition of the internal solution, initially mixing together the following components, in a tangential type closed mixer, at a temperature of 70°C: 54% by weight of fuel impermeable nitrilic polymers, 39% by weight of strengthening batches (in particular carbon black), 5% by weight of resins and 2% by weight of vulcanising agents. The blend was made uniform and removed in the form of a foil having a thickness of 1 ÷ 2 mm and subsequently cut in pieces and immersed in dimethylethylketone in a weight proportion of 1:5, where it was allowed to bulk for 2 hours.

Subsequently, by means of a fast mixer, with a treatment of about 2 hours, the complete dissolution of the first blend was obtained and a tackifier resin, in an amount of 31% by weight of the final composition of the internal rubber solution, and a vulcanising agent, in an amount of 9% by weight of the final composition of the internal rubber solution were added thereto continuing to stir the blend for further 60 minutes.

Finally, the viscosity of the obtained rubber solution was controlled, in order to evaluate the need of adjusting it by addition of methylethylketone.

### Preparation of the external rubber solution

The external solution was prepared through the following method.

A first blend was prepared, in an amount of 42% by weight of the final composition of the external solution, initially mixing together, in a tangential type closed mixer, at a temperature of 70°C, the following components: 54% by weight of fuel impermeable nitrilic polymers, 39% by weight of strengthening batches (in particular carbon blacks), 5% by weight of resins and 2% by weight of vulcanising agents.

The blend was made uniform and removed in the form of a foil having a thickness of 2 ÷ 3 mm.

The foil was cut in pieces and immersed in dimethylethylketone in a weight proportion of 1:6.

All is allowed to bulk for 1 hour.

Subsequently, by means of a fast mixer, with a treatment of 2 hours, the complete dissolution of the blend was obtained.

Then, a tackifier resin, in an amount of 25% by weight of the final composition of the external rubber solution and a vulcanising agent, in an amount of 3% by weight of the final composition of the external rubber solution was added and stirring of the blend continued for further 30 minutes.

Then methylethylketone was added in an amount of 30% by weight of the final composition of the external rubber solution and stirring of the blend continued for further 30 minutes.

Finally, the viscosity of the obtained rubber solution was controlled, in order to evaluate the need of adjusting it by addition of methylethylke-tone.

### Technical features of the structure

The technical features of the obtained flexible structure were compared with those of a reference flexible structure for vessels, obtaining the results shown in the following Table 1, wherein the code RIF1 stands for the reference flexible structure and the code ES1 stands for the structure obtained through the example 1.

**Table 1**

| | Weight G/m² | Thickness mm | Breaking point kg/cm | Operative temperature °C | Permeability G/24h/m2 |
|---|---|---|---|---|---|
| RIF1 | 760 | < 1 | 40 | -54 ÷ 71 | 1.889 |
| ES1 | 300 | < 0,4 | 118 | -54 ÷ 100 | 1.889 |

### Example 2.

A self-stagnant vessel structure was prepared, the structure being composed by:
- 30% by weight of a fabric constituted by PBO fibres and polyester fibres having the following features: density 1,7 dtex, absolute density 1,5 g/cm³, humidity reabsorption (65% RH) 2,5%, traction breaking load 40 cN/dtex, traction elastic coefficient 1500 cN/dtex, breaking stretch from 2,5%;
- 10% by weight of a polyetheretherketone film having a thickness of 25 E-6 m (fuel resistant material);
- 35% by weight of a self-sealant rubber blend;
- 25% by weight of rubber solution based on a nitrilic rubber (distributed among coupling solution, internal solution and external solution).

The structure was prepared by means of sequential application of a rubber internal solution, a film of a fuel resistant material, a first layer of rubber coupling solution, a foil of rubber blend having self-sealant aptitude, a second layer of rubber coupling solution, 3 layers of a fabric, imbibed in the coupling solution, and finally a rubber external solution.

The used coupling solution, the internal solution and the external solution are the same as those prepared for example 1.

Differently, the foil of material having self-sealant features was obtained by mixing together, in a tangential type closed mixer, at a temperature of 100°C, the following components: 91 % by weight of natural rubber with constant viscosity, 2,5% by weight of strengthening mineral batches, 4% by weight of resins and 2,5% by weight of vulcanising agents.

The blend was made uniform and removed in the form of a foil having a thickness of 1,4 mm.

The obtained foil was applied according to the application sequence previously shown.

The technical features of the obtained self-stagnant structure were compared with those of a reference self-stagnant structure, obtaining the results shown in the following Table 2, wherein the code RIF2 stands for the reference self-stagnant structure and the code ES2 stands for the structure obtained through example 2.

**Table 2**

| | Weight g/m² | Thickness mm | Breaking point kg/cm | Operative temperature °C | Permeability g/24h/m2 |
|---|---|---|---|---|---|
| RIF2 | 4000 | 4 | 490 | -54 ÷ 71 | 1.889 |
| ES2 | 1500 | 1,5 | 788 | -54 ÷ 100 | 1.889 |

### Example 3.

An impact resistant vessel structure was prepared, the structure being composed by:
- 75% by weight of a fabric constituted by PBO fibres and polyester fibres having the following features: density 1,7 dtex, absolute density 1,5 g/cm³, humidity reabsorption (65% RH) 1,0%, traction breaking load 38 cN/dtex, traction elastic coefficient from 1700 cN/dtex, breaking stretch 2%;
- 10% by weight of a polyimide film and a polyetheretherketone film having a thickness of 25 E-6 m;
- 15% by weight of a rubber solution based on a nitrilic rubber (distributed among coupling solution, internal solution and external solution).

The structure was prepared through sequential application of internal rubber solution, film of fuel resistant material, rubber coupling solution, 4 layers of fabric, imbibed in rubber coupling solution, and finally the external rubber solution.

The used coupling solution, the internal solution and the external solution are the same as those prepared for example 1.

The technical features of the obtained impact resistant structure were compared with those of a reference impact resistant structure, having typical features, obtaining the results shown in Table 3, wherein the RIF3 stands for the reference impact resistant structure and the code ES3 stands for the structure obtained through example 3.

**Table 3**

| | Weight g/m² | Thickness mm | Breaking point Kg/cm | Operative temperatura °C | Permeability g/24h/m2 |
|---|---|---|---|---|---|
| RIF3 | 2400 | 3 | 394 | -54 ÷ 71 | 1.889 |
| ES3 | 700 | 1,5 | 690 | -54 ÷ 100 | 1.889 |

The present invention was described for illustrative, not limitative purposes, according to its preferred embodiments, but it is to be understood that changes and/or modifications can be made by those skilled in the art without for this departing from the related scope of protection, as defined by the enclosed claims.

## Claims

1. Vessel having high mechanical performances, whose structure comprises a plurality of superimposed layers, each of them being devoted to a particular function, **characterised in that** said structure is composed of:
- 25-80% by weight of a fabric constituted by PBO fibres and/or polyester like liquid crystals fibres and/or high molecular weight polyethylene fibres;
- 2,5-15% by weight of a polyimide film and/or a polyetheretherketone film;
- 10-40% by weight of a rubber solution based on a nitrilic rubber;
- 0-35% by weight of rubber blends having self-sealant aptitude.

2. Vessel having high mechanical performances, according to claim 1, in particular of flexible type, **characterised in that** said structure is composed by:
- 50-70% by weight of a fabric constituted by PBO fibres and/or polyester like liquid crystals fibres and/or high molecular weight polyethylene fibres having the following features: density 1,7 dtex, absolute density 1,5 g/cm³, humidity reabsorption (65% RH) 0,5-3%, traction breaking load 30-40 cN/dtex, traction elastic coefficient from 1000 to 2000 cN/dtex, breaking stretch from 2 to 4%;
- 2,5%-12% by weight of a polyimide film and/or a polyetheretherketone film having a thickness of 25-75 E-6 m;
- 20-40% by weight of rubber solution based on a nitrilic rubber.

3. Vessel having high mechanical performances, according to claim 1, in particular of self-stagnant type, **characterised in that** said structure is composed by:
- 25-50% by weight of a fabric constituted by PBO fibres and/or polyester like liquid crystals fibres and/or high molecular weight polyethylene fibres having the following features: density 1,7 dtex, absolute density 1,5 g/cm³, humidity reabsorption (65% RH) 0,5-3%, traction breaking load 30-40 cN/dtex, traction elastic coefficient from 1000 to 2000 cN/dtex, breaking stretch from 2 a 4%;
- 5-15% by weight of a polyimide film and/or a polyetheretherketone film having a thickness of 25-75 E-6 m;
- 20-40% by weight of rubber solution based on a nitrilic rubber;
- 15-35% by weight of rubber blends having a self-sealant aptitude.

4. Vessel having high mechanical performances, according to claim 1, in particular of the impact resistant type, **characterised in that** said structure is composed by:
- 60-80% by weight of a fabric constituted by PBO fibres and/or polyester like liquid crystals fibres and/or high molecular weight polyethylene fibres having the following features: density 1,7 dtex, absolute density 1,5 g/cm³, humidity reabsorption (65% RH) 0,5-3%, traction breaking load 30-40 cN/dtex, traction elastic coefficient from 1000 a 2000 cN/dtex, breaking stretch from 2 to 4%;
- 5-15% by weight of a polyimide film and/or a polyetheretherketone film having a thickness of 25-75 E-6 m;
- 10-35% by weight of rubber solution based on a nitrilic rubber.

5. Vessel having high mechanical performances, according to any of claims 1-4, **characterised in that** said structure is composed by a series of layers, from the inside to the outside constituted by a rubber internal solution, a film of a fuel resistant material, a rubber coupling solution, a number comprised between 1 and 6 layers of fibres fabric and finally a rubber external solution.

6. Vessel having high mechanical performances, according to claim 5, **characterised in that** said layers of fibres fabric are imbibed in said rubber coupling solution.

7. Vessel having high mechanical performances, according to any of claims 5 or 6, in particular for impact resistant vessels, **characterised in that** it comprises 2-6 layers of fabric.

8. Vessel having high mechanical performances, according to any of claims 5 or 6, in particular for self-stagnant vessels, **characterised in that** it comprises 2-4 layers of fabric and one layer of rubber having self-sealant aptitude, applied after a first and before a second layer of rubber coupling solution, said first layer of rubber coupling solution being applied after said film of fuel resistant material and said second layer of rubber coupling solution being applied before said fibres fabric.

9. Method for the production of a vessel having high mechanical performances, as defined in claims 1-8, wherein the structure of the vessel is realised through sequential application of different layers, starting form the more internal layer and going towards the more external layers.

10. Rubber coupling solution, for the use in a vessel having high mechanical performances, as defined in claims 1-8, obtainable according to a method comprising the following steps:
- preparing a first blend, in an amount comprised between 40 and 75% by weight of the final composition of the rubber solution, by mixing together, in a closed mixer of tangential or interpenetrating type or in an open mixer, at a temperature from 70 to 140°C, nitrilic polymer in an amount comprised between 30 and 60% by weight of said first blend, together with an amount from 15 to 40% by weight of strengthening batches, an amount from 5 to 20% by weight of resins and an amount from 1 to 10% by weight of vulcanising agent;
- making the blend uniform and removing it in the form of a foil having a thickness of 1 ÷ 5 mm;
- cutting the foil in pieces and immersing it in methylethylketone, dimethylethylketone, heptane, toluol or ethanol in a weight proportion in the range 1:1-1:11;
- allowing to bulk for 0,5-3 hours;
- completely dissolving the blend by means of a fast mixer, through a treatment of 0,50-2,5 hours;
- adding a tackifier resin in an amount between 2 and 50% by weight of the final composition of the rubber solution;
- stirring the obtained blend for a period comprised between 15 and 240 minutes, at a temperature comprised between 15 and 30°C;
- separately, preparing a second blend, in an amount comprised between 6 and 30% by weight of the final composition of the rubber solution, obtained by mixing together the following components: a vulcanising resin in an amount comprised between 15 and 30% by weight of said second blend, between 20 and 40% by weight of an adhesive resin, between 15 and 35% by weight of ethanol and between 10 and 40% by weight of methylethylketone;
- adding the second blend to the main blend in a stirrer at a temperature of 15-30°C, and stirring the obtained blend for 15-90 minutes;
- adding to the obtained blend of a component selected from ethanol and glycerol, in an amount comprised between 2 and 8% by weight of the final composition of the rubber solution, and stirring of the obtained blend for further 15-90 minutes;
- controlling the viscosity of the obtained rubber solution, and in case adjusting it by adding methylethylketone.

11. Rubber coupling solution according to claim 10, wherein after the step of addition to the blend of a component selected from ethanol and glycerol, and the following stirring of the obtained blend and before the step of controlling the viscosity of the obtained rubber solution, the following step is comprised:
- adding to the obtained blend of a vulcanising agent, in an amount comprised between 2 and 8% by weight of the final composition of the rubber solution, and stirring the obtained blend for further 15-90 minutes.

12. Rubber internal solution for the use in a vessel having high mechanical performances, as defined in claims 1-8, obtainable through a method comprising the following steps:
- preparing a first blend, in an amount comprised between 50 and 70% by weight of the final composition of the internal solution, by initially mixing together, in a closed mixer of tangential or interpenetrating type or in an open mixer, at a temperature comprised between 70 and 140°C, the following components: nitrilic polymers in an amount comprised between 40 and 65% by weight of the first blend, between 30 and 50% by weight of strengthening batches, between 2,5 and 10% by weight of resins and between 1 and 5% by weight of vulcanising agents;
- making the blend uniform and removing it in the form of a foil having a thickness of 1 ÷ 5 mm;
- cutting the foil in pieces and immersing it in methylethylketone, dimethylethylketone, heptane, toluol or ethanol in a weight proportion in the range 1:1-1:11;
- allowing to bulk for 0,5-3 hours;
- completely dissolving the blend by means of a fast mixer, through a treatment of 0,50-2,5 hours;
- adding a tackifier resin in an amount comprised between 20 and 40% by weight of the final composition of the internal rubber solution;
- adding a vulcanising agent, in an amount between 5 and 15% by weight of the final composition of the internal rubber solution;
- stirring the blend for further 30-240 minutes;
- controlling the viscosity of the obtained rubber solution, and in case adjusting it by means of methylethylketone.

13. Rubber external solution, for the use in a vessel having high mechanical performances, as defined in claims 1-8, obtainable through a method comprising the following steps:
- preparing a first blend, in an amount between 30 and 50% by weight of the final composition of the external solution, initially mixing together, in a closed mixer of tangential or interpenetrating type or in an open mixer, at a temperature comprised between 70 and 140°C, the following components: nitrilic polymers in an amount comprised between 40 and 65% by weight of the first blend, between 30 and 50% by weight of strengthening batches, between 2,5 and 10% by weight of resins and between 1 and 5% by weight of vulcanising agents;
- making the blend uniform and removing it in the form of a foil having a thickness of 1 ÷ 5 mm;
- cutting the foil in pieces and immersing it in methylethylketone, dimethylethylketone, heptane, toluol or ethanol in a weight proportion in the range 1:1-1:11;
- allowing to bulk for 0,5-3 hours;
- completely dissolving the blend by means of a fast mixer, through a treatment of 0,50-2,5 hours;
- adding a tackifier resin in an amount between 20 and 40% by weight of the final composition of the external rubber solution;
- adding a vulcanising agent, in an amount between 1 and 10% by weight of the final composition of the external rubber solution;
- stirring the blend for further 15-90 minutes;
- adding methylethylketone in an amount comprised between 20 and 40% by weight of the final composition of the external rubber solution;
- stirring the blend for further 15-240 minutes;
- controlling the viscosity of the obtained rubber solution, and in case adjusting it by means of methylethylketone.
